Europäisches Patentamt

European Patent Office

Office européen des brevets

(11) Publication number: **0 005 354**
**A1**

(12) **EUROPEAN PATENT APPLICATION**

(21) Application number: **79300726.1**

(22) Date of filing: **27.04.79**

(51) Int. Cl.²: **A 01 C 11/02,** B 65 G 43/08,
A 01 C 5/04

(30) Priority: **27.04.78 AU 4181/7ε**

(43) Date of publication of application: **14.11.79**
**Bulletin 79/23**

(84) Designated Contracting States: **BE CH DE FR GB IT LU
NL SE**

(71) Applicant: **Williames, Geoffrey Allan, 137 Normanby
Street Extension, Warragul 3820 Victoria (AU)**

(72) Inventor: **Williames, Geoffrey Allan, 137 Normanby
Street Extension, Warragul 3820 Victoria (AU)**

(74) Representative: **Hallam, Arnold Vincent et al, E.N.
LEWIS & TAYLOR 144 New Walk, Leicester
LE1 7JA (GB)**

(54) **Seedling transplanting machine.**

㊼ A seedling transplanting machine capable of auto-
matically selecting suitable seedlings for transplanting
from one container into a separate seedling propagating
area in which the seedlings are individually held in an
endless cell chain one to each cell, the propagating area
being either a seedling tray or larger cell chain including
sprockets for advancing the cell chain and associated
seedling to a transplanting head including a plunger (11)
and a seedling sensing device (10), the plunger (11) being
operable when a suitable transplantable seedling is
sensed, the plunger (11) being arranged to impinge on
and remove the seedling and its associated clod of soil
from the chain cell into the separate propagating area. The
plunger head may be stationary or it may traverse a pre-
determined path for transplanting seedlings in a pattern
into a standard seedling tray. A dibbing machine is pro-
vided to form predetermined holes in the soil of the seed-
ling tray and the plunger head (11) is mounted on an in-
dexing mechanism (12) movable to coincide with the holes
formed in the soil during the transplanting operation.

- 1 -

## Seedling Transplating
## Machine

This invention relates to a machine for transplanting seedlings and more particularly but not exclusively for the transplanting into a seedling tray of known type of seedling individually germinated in a seed cell as disclosed in copending European Patent Application No. 79300223.9.

Presently there is no effective machine known to applicant for transplanting germinated seedlings into a seedling tray or other propagating apparatus. One well known and labour intensive method presently used as known to applicant involves the germination of a large number of seeds in a relatively small area, and the seedlings are manually individually picked out and re-planted in a standard seed box. This method whilst being effective in only having strong seedlings transplanted is very slow and expensive because of the expense of labour. The invention has particular applicability for use with the cell chain described in the above-mentioned European Patent Application in which is disclosed a chain of cells each holding soil for propagating a single seedling therein. The cell chain can be graded into various sizes wherein a seedling can be transplanted from a small cell into a larger cell for further propagation in a nursery prior to planting out. This is particularly applicable to propagation of trees.

In the standard size seedling box of approximately 6" x 24", 105 to 110 preferably 108 seedlings are planted out. It is the object of the present invention to provide an automatic seedling transplanter which can be operated by unskilled labour but which is efficient and speedy in operation.

It is a further object of the invention to provide a transplanting machine which will transplant seedlings from a cell chain as herein described into a seedling tray or into another cell chain as herein described.

There is provided according to the present invention a seedling transplanting machine for transplanting a seedling and its associated clod of propagating medium e.g. soil, from a hollow cell in a chain of such cells conveying said seedling comprising advancing means 13 engageable with the cell chain for advancing said cell to a position adjacent a plunger head, said plunger head including plunger means adapted to contact said clod of propagating medium in a said cell and disengage it from said cell, container means beneath said plunger head for receiving said disengaged seedling and associated clod of propagating medium.

There is also provided a seedling transplanting machine for transplanting a seedling and its associated clod of propagating medium e.g. soil, from a hollow cell in a chain of such cells conveying said seedling comprising advancing means engageable with the cell chain for advancing said cell to a position adjacent a plunger head, said plunger head including plunger means adapted to contact said clod of propagating medium in said cell and disengage it from said cell, an indexing mechanism having said plunger head mounted thereon for selective transverse and longitudinal step by step movement within a defined area, a conveyor means for conveying a container means to a position beneath said plunger head, the arrangement being such that the plunger means transfers a seedling and its associated clod to a position in said container means under control of said indexing mechanism.

Conveniently the soil in the container means is prepunched by a dibbing means to form predetermined spaced apertures for receipt of each seedling clod. The container means for seedlings may include larger cell chains or pots for receiving the transferred seedling clod.

The seedling clod is positioned in a cell chain as previously described and the chain is systematically fed into the machine together with individual germinated seedlings therein for location in coincidence with said plunger.

The machine includes a seedling detection means whereby as each cell is moved into coincidence with the plunger, the presence of a seedling is detected prior to actuation of the plunger to engage and transplant the seedling. If the seedling is not present or is too small the plunger will not be actuated

- 4 -

and the cell chain is moved onto the next cell which is in turn sensed and the seedling is transplanted if present or of adequate size.

Apparatus for automatically moving the seedling boxes into coincidence with the indexed plunger head is provided. This apparatus includes means for accurately positioning the seedling tray in relationship to the plunger head.

The present invention is further described hereinafter, by way of example, with reference to the accompanying drawings, in which:

Figure 1 depicts in schematic fashion a control circuit controlling a photoelectric plant sensor, indexing and plunger mechanism;

Figure 2 shows a partial perspective view of the transplanter head looked at from above;

Figure 3 shows a partial plan view of a ratchet drive for the cell chain;

Figure 4 shows a sprocket arrangement which engages the chain;

Figure 5 shows the take up and support platforms from the cell chain; and

Figures 6 to 8 show essential details of a dibbing machine for forming planting holes in a tray full of propagating soil;

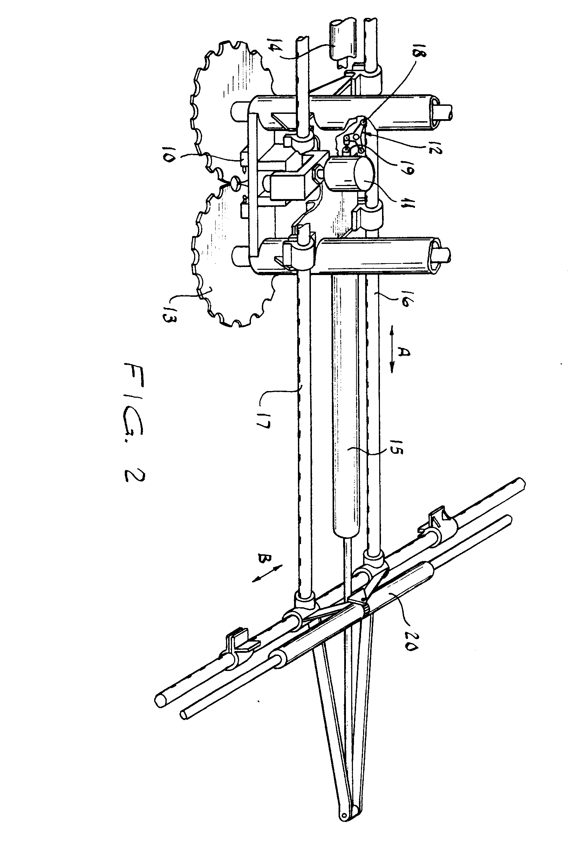

Referring to Figure 2, this drawing shows the mounting head for the indexing mechanism 12, the sprocket drive 13 for the cell chain, the photoelectric light sensing device 10, the indexing mechanism and plunger tube drive cylinder 11.

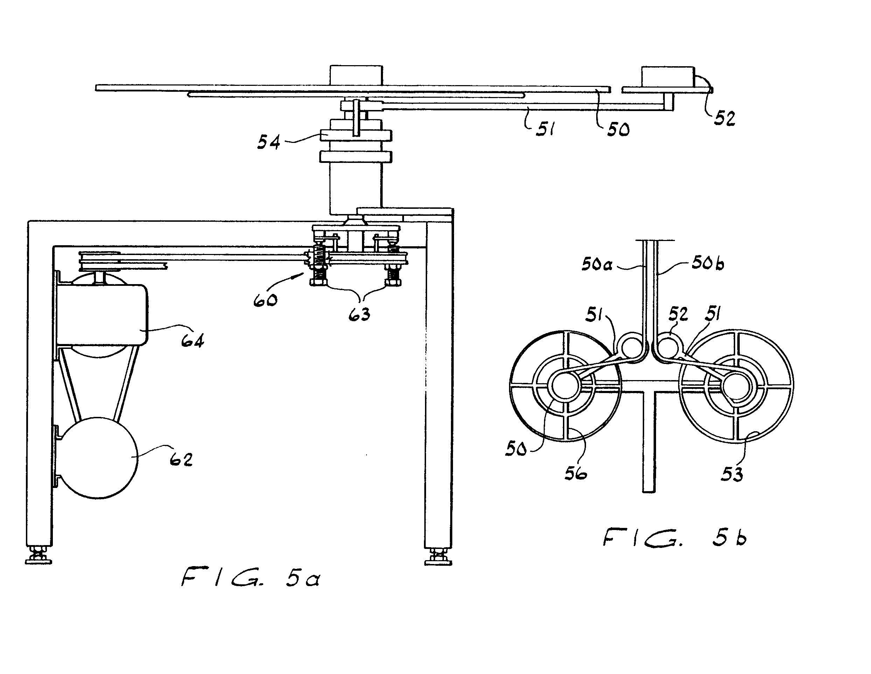

The cell chain having a seedling in each cell is supported on platens 53, 56, Figure 5, and fed to sprocket wheels 13.

The plunger head and sprocket wheels are indexed up and down the length of a seedling tray (not shown) positioned beneath the plunger head in the direction of arrow A and across in the direction of arrow B when at the end of a longitudinal row.

A pneumatic cylinder 14, 15 is provided to move the head in the longitudinal direction, the cylinder is connected to the head and is operable under the influence of influx of pressurised air to move either to the right or left of the drawing.

The head is mounted on indexing guides 16 having notches or dimples 17 which engage with the indexing mechanism 12. The indexing mechanism includes fingers 18 which rock about a shaft in response to a small air cylinder 19. The fingers 18 lock in the dimples 17 and are released by the action of the cylinder 19 allowing stepwise movement of the head under the influence of the cylinder 14 or 15. Each step of movement of the head represents a planting position for a seedling in a cell which has been coincidentally moved up by the sprocket 13 to a position beneath the plunger mechanism 11. The phto cell 10 senses the existence of a seedling of adequate height, say between 5-15 m.m., at which time the plunger is actuated by the plunger head 11 to force the seedling and its clod down into a hole in the soil in the seedling tray. The hole is preformed by the dibbing machine described later and matches the size of the seedling clod in the cell. If a seedling is not sensed the plunger does not operate but instead the sprocket is indexed one increment to the next cell when the presence or not of a seedling therein is sensed. If a plant is sensed the plunger operates and the indexing mechanism 12 is activated to move the plunger head along one notch to coincide with the next planting hole in the seedling tray. It will be understood that the light sensing cell 10 may be substituted by an infra-red sensing device or air sensing system using a jet of air blowing into a receiver across the path of a seedling.

The operation of the control circuit will be described in more detail later.

The seedling trays are positioned automatically beneath the transplanter mechanism. The machine can sense the existence of a tray so that a transplanting operation can
can proceed automatically.

The soil is also automatically apertured by a dibbing
machine prior to positioning of the tray in positions to
match the incremental movement of the indexing mechanism.
Alternatively the invention may include a simple arrangement
of transplanting seedlings from the cell chain moving past a
stationary plunger head into a second series of cell chains
moving beneath said cell chain thus dispensing with the need
for indexing movement of the plunger head.

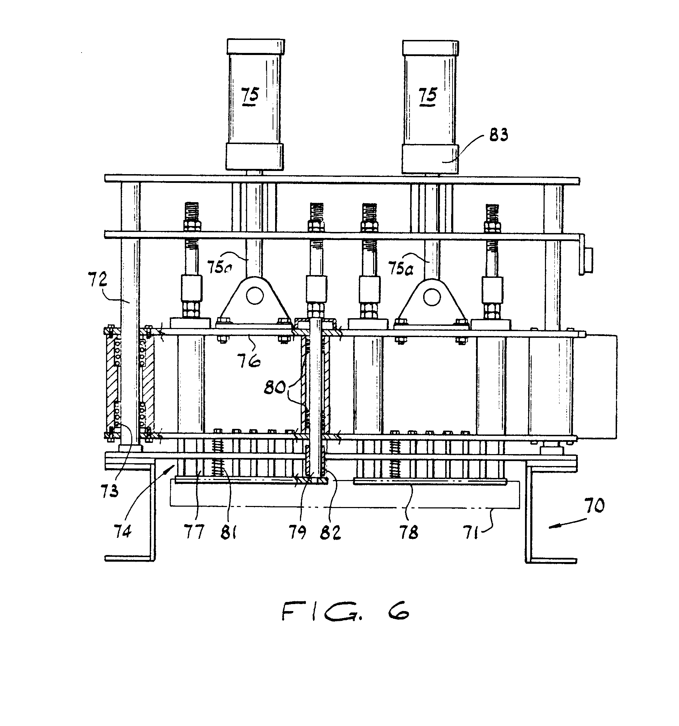

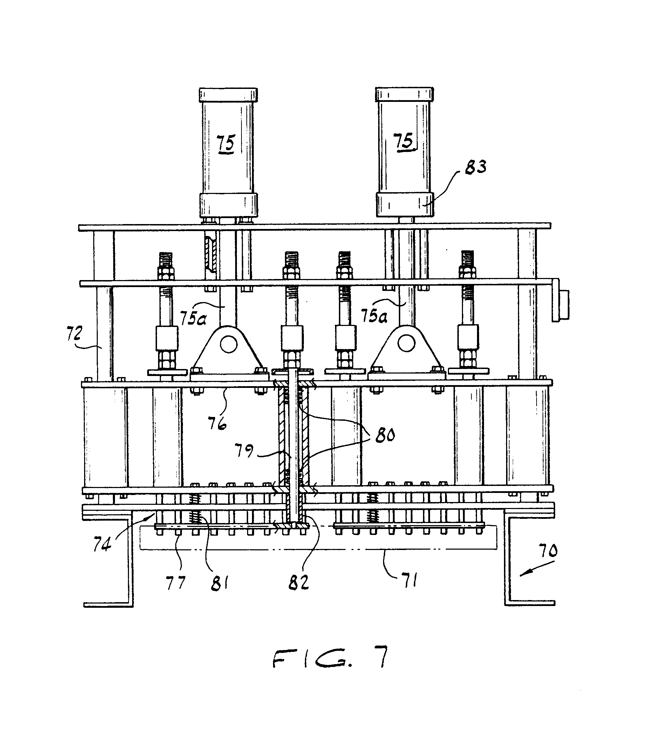

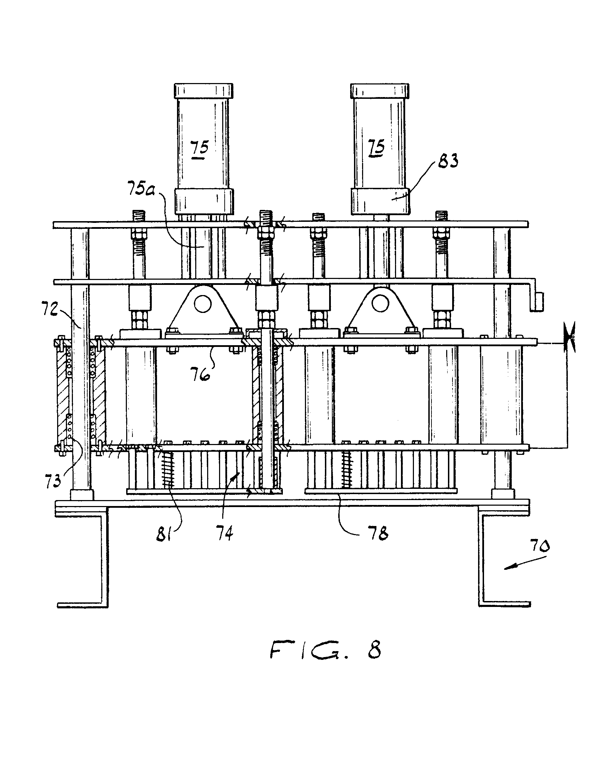

The box is moved up in a group on a conveyor (not
shown) to a dibbing station shown in Figures 6 to 8.

The dibbing machine includes a frame 70 supported above
a conveyor for seed boxes 71. The frame includes guide
shafts 72 having linear bearings 73 mounted thereon for
slidable movement of the dibbing mechanism 74. The dibbing
mechanism includes pressure cylinders 75 mechanically connected
to a box section 76 upon which are mounted a plurality of
dibbing pins 77. Two sets of dibbing pins are provided each
preferably 54 in number and a pressure plate 78 is slidably
mounted at the ends of the pins. In operation the box section
76 moves up and down under the influence of the pressure
cylinders.

In operation the seedling box engages dibbing position

- 8 -

box stops (not shown) which leads to actuation of a valve controlling pressure fluid to the pressure cylinders 75.

The cylinders 75 are connected by rods 75a and actuate the box section 76 which is guided vertically by the four hardened steel corner guide shafts 72. The lower ends of the steel dibbing pins 77 protrude through two separate pressure plates which are each attached to four hardened steel guide pins 79 movable up through linear ball bearings 80 and slide up the pins, coil springs 81 are fitted between the box base and pressure plates so that the box plate presses the surface of the soil levelling and slightly compacting it (there are two separate pressure plates to miss the centre partition sometimes present in the seedling boxes and to allow for differential in soil height in either end of the box). After compacting the soil the 108 dibbing pins penetrate the soil continuing on until limit stop bushes 82 on the pressure plate guide pins contact the lower plate on the box section 76. At this point the pressure in the air cylinder is directly on the pressure plates and soil surface.

A small balancing pressure cylinder 83 is connected with the main dibbing pressure cylinders when the desired pressure on the soil surface is reached acting to reverse the action in the main dibbing pressure cylinders to thereby raise the box section 76 retracting the 108 dibbing pins while the pressure plate still retains pressure on the soil surface (maintaining a firm hole shape) until the pin ends are retracted flush with the pressure plate surface thus cleaning the pins and preventing the tops of the holes from lifting and breaking out, at this point the pressure plate lifts off the soil.

After completion of the dibbing stroke the seedling box is allowed to move along the conveyor and the next seedling box to be dibbed moves into position and the action is repeated.

The dibbed box is then transported along to the transplanting area where it engages a box stop mechanism to place the seedling box immediately below the plunger mechanism 11 ready for a transplanting operation. When the box strikes the box stops, a transplanting machine plant signal circuit is activated signifying the seedling box is in the correct position ready for planting, the transplanter then automatically plants 108 plants in the box and on over running the last plant position a switch is activated and the box is then allowed to pass on to a storage area.

The horizontal passage of the box moving sideways has been fully described above, due to variation of box size and the need to register the dibbed holes exactly under the transplanter the positioning is always by locating the box on the front face and one end, to accomplish this two spring tensioned rollers are located on one side of the conveyor retention walls forcing the box against the opposite retention

-10-

wall the first set of two rollers are immediately under the dibbing machine and the second set under the transplanter.

In the operation of the transplanter the plunger head 11 is positioned at the number 1 or 108 soil aperture in the seedling tray and the head is adapted to traverse up and down the apertures step by step until each aperture has been filled with a seedling clod by actuation of the plunger.

The plunger operation is air actuated in which the plunger is a tubular hollow member having a slightly smaller diameter than a cell of the cell chain. The tubular member is adapted to engage the soil clod around a seedling in the cell and push it out and it will fall under gravity into an aperture in the soil tray. The plunger follows through and plants the clod.

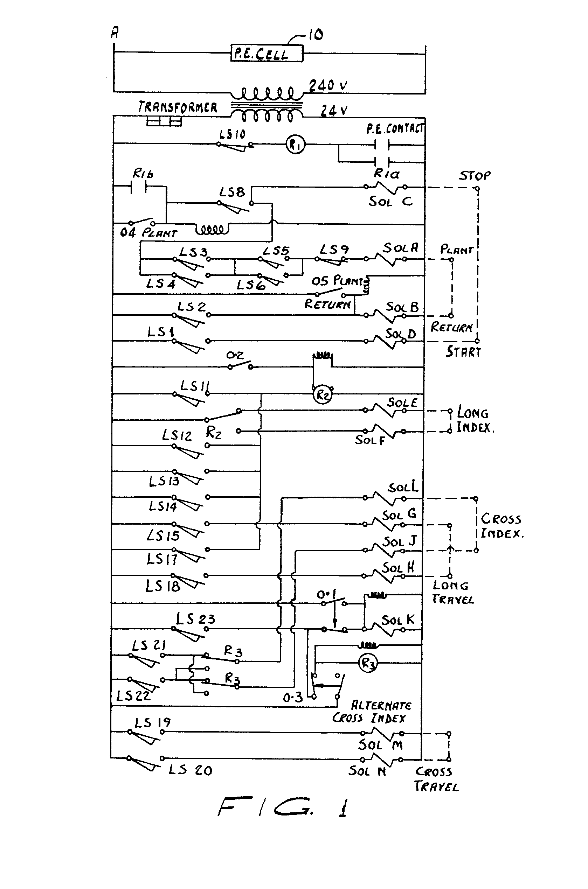

Referring to the electrical control circuit in Figure 1, solenoids SOL A and SOL B, are the actuating solenoids for the plunger. Solenoid A will only be energised when the indexing head in both the longitudinal and transverse directions are correctly positioned thus closing limit switches LS 3 and 5 or LS 4 and 6. Thus when a seedling tray is correctly positioned a limit switch LS 9 is closed thereby energising the solenoid A.

Thus the indexing operation is inter-related to the operation of the plunger by positioning of limit switch LS11 sending current to the alternating relay R2 that occurs on the plant plunger upstroke. The overall operation on this specific aspect is controlled by energisation of Relay R1 by the photocell 10 activating a relay contact when a satisfactory plant is secured. This relay is self locking and holds the plant signal until all mechanical alignment and indexes are correct for planting.

Solenoid B is activated at the bottom of the plunger stroke to activate a pressure cylinder for returning the plunger to its initial position.

Solenoid D is energised to commence a further indexing feed just as the plunger is returning. The operation is then repeated if the photocell 10 senses the existence of a seedling of adequate height.

After planting the last hole in a row in the seedling tray the indexing head will travel past the last index closing switch LS21 which is mounted to the indexing head thereby activating SOLENOID I and thereby changing direction of pressure in cross traverse index cylinder 20. The planting carriage will move across one index under the influence of cylinder 20.

While crossing between cross index positions rollers on switches LS14 and LS15 contact cam lobe (not shown) on the frame. LS14 roller protrudes further than LS15 therefore LS14 switch closes before LS15 in both directions of travel.

LS14 activates relay R2 which operates SOLENOID E and F alternately and sets longitudinal index ready for index in longitudinal return travel; LS15 then activates SOLENOID G which reverses the pressure in the longitudinal cylinder and causes the planting carriage to move along the rail until the longitudinal index roller 18 engages a notch.

This procedure is duplicated at the end of each row. After planting the last seedling the plant tube cam activates switch LS11 just before reaching top of stroke (as with all other plantings) this sends a pulse to R2 alternating relay which alternates SOLENOID E.F. which in turn alternates longitudinal index arm on the index rail causing the longitudinal roller index to press against the indexed guide rail as the longitudinal cylinder pressure is still in the same direction at this point of time. As there are no further index notches 17 in the rail 16 the carriage moves past the last of the planting positions and several switches strike the cam plate just prior to the carriage movement being arrested by the rubber limit stops. This procedure occurs on both ends of the planting cycle as described below (a) - (d).

(a)     Switch LS23 sends a pulse (both ends of cycle) which activates SOLENOID K which activates a pilot valve causing reversal of pressure in the seedling box retention cylinder and causes the box retention to retract and allows the planted box to pass on by means of the horizontal chain elevator box positioner which is driven by a friction slip clutch (not shown) but is of standard construction. The moment the box retention moves as above the switch LS9 breaks the plant cylinder signal conductor this therefore allows the machine to select another seedling for planting and hold the signal until a fresh unplanted dibbed box is in the correct location ready for planting, at this point switch LS9 is closed and machine planting continues.

(b) Switch LS23 as well as sending signal to SOLENOID K as described above in (a) sends a pulse to Relay R3, this is a twin arm oscillating switch which effectively crosses the following circuits switch LS21 from SOLENOID I to SOLENOID J and switch LS22 from SOLENOID J to SOLENOID I and therefore reverses all cross indexing ready for the plantings in reverse direction (this occurs both ends of planting cycles).

(c) Switches LS17 and LS18 contact, switch LS17 closes first sending a pulse to Relay R2 which sends alternating pulse to SOLENOID E and SOLENOID F and resets the longitudinal index ready to index into the first planting position. Switch LS18 is contacted after all other switches have made contact and sends a pulse to SOLENOID H which causes the air pressure in the longitudinal cylinder 14, 15 to be reversed which pushes the planting carriage back to first planting index position and holds steady pressure on for the full indexed positions and plantings, then runs past the last guide rail index position striking switches, one of which reverses the pressure in the longitudinal cylinder again as described.

(d)     Switches LS19 and LS20 are activated separately at each end of the over run positions after the planting cycle.  Switch LS19 activates SOLENOID M which reverses the cross traverse cylinder 20 air pressure, but the carriage cannot cross travel because of the locked in cross index, until it has carried out the plantings and the cross index switch is contacted. Switch LS20 activates SOLENOID L at other end of plant cycle and reverse pressure in the cross index cylinder and same function as described for LS19 takes place.

Various manual override buttons may be provided to allow manual operation in specific areas without upsetting the automatic cycle.

Thus seedling boxes can be released without going through the full indexing cycle and manual override is provided on the longitudinal and transverse indexing runs.

Similar manual planting steps can be made.

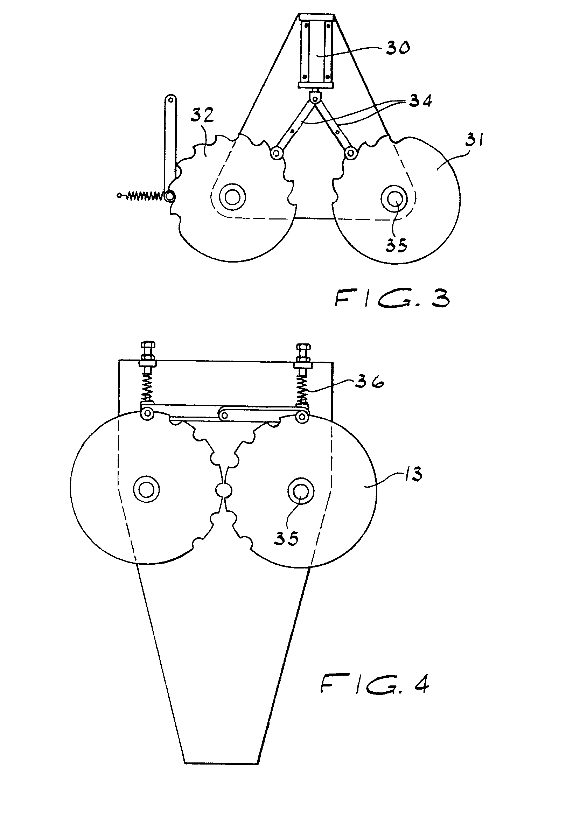

Figures 3 and 4 show the driving arrangement for the cell sprocket by means of an air cylinder flip flop arrangement in which the air cylinder 30 is connected to two ratchet wheels 31, 32 by links 34. The links 34 reciprocate under the action of the cylinder and this rotates sprockets 13 through shafts 35 which extend between the ratchet wheels 31, 32 and sprockets 13. The sprockets move incrementally and their accurate positioning is ensured by spring biased sensing members 36.

Figures 5 and 6 show the linkage and spool arrangement for supporting the cell chain 50. The filled chain 50a with seedling is pulled away from the support spool 56 by the indexing sprocket 13 (see Figure 2) of the transplanting machine and the empty cells 50b are then fed back onto a receiving spool 53. The arms 51 with associated pulleys 52 are spring loaded as by springs 54 to maintain a steady tension on the chain and to take up slack in operation. The infeed and outfeed spools 53, 56 include a clutch mechanism 60 mounted on the spool shaft 61 to take up slack in the cell chain caused by the indexing movement of the planting head during operation of the machine. It is important that the cell chain has a certain amount of tension applied to it both during feed to the transplanter sprocket and feed to the outfeed spool 56 after removal of the seedling from the cell. A small motor 62 is provided to drive the outfeed spool through gearbox 64 and clutch 60.

The cell chain is fed off past tensioning roller 52 with the motor driving the infeed spool in opposite direction. The clutch and the tension on the roller arm 51 is adjusted so that adequate tension is applied to the chain as shown in Figure 5b. The outfeed spool is constructed in the same way with the motor drive urging the outfeed spool to take up the cell chain after travelling through the transplanter. The clutch 60 includes adjusting screws 63. Tension is adjusted by screwing the screws outward to reduce clutch tension and inward to increase clutch tension.

CLAIMS:

1. A machine for transplanting a seedling and its associated clod of propagating medium from a hollow cell in a chain of such cells conveying said seedling, characterised in that there are provided advancing means (13) engageable with the cell chain for advancing said cell to a position adjacent a plunger head (11), said plunger head including plunger means adapted to contact said clod of propagating medium in a said cell and disengage it from said cell.

2. A machine as claimed in claim 1 further characterised by container means beneath said plunger head for receiving said disengaged seedling and associated clod of propagating medium.

3. A machine for transplanting a seedling and its associated clod of propagating medium from a hollow cell in a chain of such cells conveying said seedling, characterised in that there are provided advancing means (13) engageable with the cell chain for advancing said cell to a position adjacent a plunger head (11), said plunger head including plunger means adapted to contact said clod of propagating medium in said cell and disengage it from said cell; an indexing mechanism (12) having said plunger head (11) mounted thereon for selective transverse and longitudinal step by step movement within a defined area; and a conveyor means for conveying a container means to a position beneath said plunger head; the arrangement being such that the plunger means is operable to transfer a seedling and its associated clod to a position in said container means under control of said indexing mechanism (12).

4. A machine as claimed in claim 2 or 3 characterised in that said container means is a seedling tray known per se containing soil or like plant propagating medium; and there is provided a dibbing mechanism associated with said transplanting machine for forming plant holes in said propagating medium, the dibbing mechanism comprising a frame (70), a pressure cylinder (75) mounted on the frame ·for reciprocating a dibbing head, said head having a pressure plate (78) with a pattern of apertures therein and a plurality of dibbers (77) movable relative to said pressure plate to project said apertures during a dibbing operation, the arrangement being such that the pressure plate (78) applies a force on the surface of said propagating medium and remains in contact until said dibbers (77) have formed a plant hole and have been withdrawn therefrom.

5. A machine as claimed in claim 1, 2, 3 or 4 characterised by a photoelectric sensing device (10) arranged adjacent to said plunger head (11), the light beam associated with said sensing device being directed across the top of a plant cell advanced to a position adjacent to said plunger head (11); said device (10) being operable on sensing the presence of a seedling of predetermined size in the cell to trigger actuation of said plunger means for disengaging said seedling and clod from said cell.

FIG. 1

FIG. 2

3/7

FIG. 3

FIG. 4

0005354

FIG. 5a

FIG. 5b

FIG. 6

6/7

FIG. 7

FIG. 8

European Patent
Office

**EUROPEAN SEARCH REPORT**

Application number

EP 79 300 726.1

| Category | DOCUMENTS CONSIDERED TO·BE RELEVANT | | CLASSIFICATION OF THE APPLICATION (Int. Cl.²) |
|---|---|---|---|
| | Citation of document with indication, where appropriate, of relevant passages | Relevant to claim | |
| | US – A – 3 820 480 (BLACKMORE et al.)<br>* claim 1 *<br><br>–– | 1 | A 01 C   11/02<br>B 65 G   43/08<br>A 01 C    5/04 |
| | DE – A – 2 709 110 (NIPPON TENSAI SEITO)<br>* page 22, line 28; fig. 8 *<br><br>–– | 1 | |
| A | US – A – 3 906 875 (KESINGER et al.)<br>* fig. 5 *<br><br>–– | | **TECHNICAL FIELDS SEARCHED (Int.Cl.²)**<br><br>A 01 C    5/00 |
| A | US – A– 3 446 164 (HUANG et al.)<br>* fig. 1 *<br><br>–– | | A 01 C   11/00<br>A 01 G    9/00<br>B 07 C    5/12<br>B 65 G   43/00 |
| A | DE – A – 1 657 007 (NIPPON TENSAI SEITO)<br>* claim 1 *<br><br>–– | | |
| A | US   – A – 3 557 489 (FERRAND)<br>* fig. 6 *<br><br>–– | | **CATEGORY OF CITED DOCUMENTS** |
| A | US – A – 3 722 137 (KESINGER et al.)<br>* fig. 1 *<br><br>–––– | | X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

| X | The present search report has been drawn up for all claims | | |
|---|---|---|---|
| Place of search<br>Berlin | Date of completion of the search<br>06–08–1979 | Examiner<br>BITTNER | |

EPO Form 1503.1   06.78